# DEMANDE DE BREVET EUROPEEN

(11) **EP 2 612 783 A1**
(43) Date de publication de la demande: **10.07.2013**
(21) Numéro de dépôt: 12150326.2
(22) Date de dépôt: 05.01.2012
(51) Int. Cl.: B60L 11/18

(54) **Dispositif et procédé de chargement et/ou déchargement pour véhicules hybrides ou électriques**

(71) Demandeur: Electrabel, 1000 Brussel (BE)
(72) Inventeur: Duys, Eric, 2900 Schoten (BE); De Raedemaeker, Philippe, 3140 Keerbergen (BE)
(74) Mandataire: Chauveau, Ariane

(57) **Abrégé**

La présente invention concerne un dispositif (10) et un procédé de chargement et/ou déchargement pour véhicules (30) hybrides ou électriques, comprenant une source d'alimentation électrique, une prise (12) de connexion à un moyen de recharge (31) du véhicule, une interface de données (13), des moyens de contrôle de charge du véhicule (30), des moyens d'interaction avec le système de gestion de la batterie du véhicule, des moyens de réception d'informations émises ou envoyées par l'utilisateur via l'interface de données locale, ou à distance, permettant notamment à chaque moment et à chaque lieu:
- d'être informé automatiquement ou sur appel sur le statut de chargement de son véhicule,
- de définir ou modifier ou choisir un planning de chargement et/ou déchargement,

Ce dispositif communique via internet avec une plateforme, qui permet, en combinaison avec d'autres modules, d'identifier l'utilisateur, ou de transférer les données en provenance du dispositif servant à la facturation.

## Description

La présente invention concerne le domaine du chargement et/ou déchargement des véhicules hybrides rechargeables et électriques, et plus particulièrement un dispositif de chargement et/ou déchargement de véhicules hybrides ou électriques.

Actuellement le rechargement des véhicules peut être réalisé via une borne de chargement. Ces bornes de chargement comportent des moyens de connexion au véhicule à recharger. Le véhicule est connecté via ces moyens de connexion et peut ainsi être rechargé. Les moyens sont généralement sous la forme d'un connecteur de type prise électrique associé à un câble électrique relié au véhicule. Ces bornes peuvent être disposées dans les lieux de stationnement des véhicules tels que par exemple les parcs de stationnement publics privés ou payants et le long des routes.

Les bornes de chargement peuvent disposer d'un système d'accès et de paiement facile de la consommation électrique au moyen de cartes spécifique ou de carte de crédit.

Certains de ces dispositifs de chargement, tel que celui décrit dans la demande de brevet US 2011/0276448, comportent des moyens d'identification de l'utilisateur et des moyens de paiement permettant de facturer l'utilisateur et d'envoyer la facture à son domicile. Ces moyens permettent également de vérifier à distance les informations d'autorisation du compte de paiement à débiter. Les moyens de paiement peuvent permettre la mise en relation avec le service local du fournisseur d'énergie afin de demander des autorisations de paiement et d'émettre des relevés de transaction.

Un des inconvénients de ces bornes existantes provient du fait qu'elles ne permettent pas de moduler le chargement électrique de la voiture, que ce soit en termes de quantité ou dans le temps, que ce choix de modulation soit fait en direct, localement ou à distance, par l'utilisateur ou sur base d'une proposition ou d'un programme défini par un gestionnaire d'énergie (gestionnaire du réseau de distribution, gestionnaire d'énergie du bâtiment ou du parc de stationnement, fournisseur d'énergie, etc.) et confirmé par l'utilisateur, que ce soit en communication avec le système de gestion de la batterie ou non.

La présente invention a donc pour objet de pallier un ou plusieurs des inconvénients de l'art antérieur en proposant un dispositif de chargement et/ou déchargement de véhicules hybrides ou électriques, permettant de programmer, planifier, contrôler et quantifier la charge du véhicule aussi bien localement qu'à distance. Le dispositif permet à l'utilisateur soit de définir un planning de chargement, soit de choisir un planning proposé par un gestionnaire d'énergie électrique.

Pour cela, la présente invention propose, un dispositif de chargement et/ou déchargement pour véhicules hybrides ou électriques, comprenant une source d'alimentation électrique, une prise de connexion à un moyen de recharge embarqué du véhicule, une interface de données, des moyens de communication à distance, des moyens d'échange d'informations avec le véhicule, et des moyens de contrôle de charge du véhicule.

L'utilisateur peut ainsi choisir et vérifier le type de chargement/déchargement qui lui convient.

Selon un mode de réalisation de l'invention, les moyens de contrôle de charge comprennent des moyens de programmation de la charge et des moyens de planification des opérations de charge et/ou décharge.

L'utilisateur peut définir le planning de charge/décharge, et par exemple la durée, la puissance..etc.

Selon un mode de réalisation de l'invention, les moyens de contrôle de charge sont associés à l'interface de données et les moyens d'interactions avec le véhicule.

L'interface de données permet ainsi des actions par l'utilisateur sur le système de gestion de la batterie du véhicule.

Selon un mode de réalisation de l'invention, le dispositif comprend des moyens de communication à distance.

Il est possible de contrôler la charge/déchargement localement ou à distance.

Selon un mode de réalisation de l'invention, les moyens de communication à distance sont bidirectionnels.

La borne permet d'envoyer des informations mais également d'en recevoir pour par exemple des mises à jour ou une reconnaissance de l'utilisateur..etc.

Selon un mode de réalisation de l'invention, le dispositif comprend des moyens de mesure de la puissance consommée ou produite associés à des moyens de calcul de l'énergie consommée ou produite les moyens de calcul incluant un convertisseur de cette énergie sous forme monétaire.

Selon un mode de réalisation de l'invention, le dispositif comprend des moyens pour enregistrer et transmettre les données pour la facturation de l'énergie consommée par l'utilisateur via une plateforme accessible par internet.

Selon un autre aspect, l'invention concerne un système de chargement et/ou déchargement d'un véhicule hybride ou électrique, constitué par un dispositif de chargement et /ou déchargement selon une des revendications précédentes communiquant de façon bidirectionnelle avec un système de gestion de la batterie embarqué dans le véhicule.

Selon un autre aspect, l'invention concerne un procédé de chargement et /ou déchargement comprenant :
- Une étape de connexion du véhicule au dispositif de chargement et/ou déchargement selon l'invention,
- Une étape de choix du calendrier de chargement via l'interface de données et les moyens de contrôle,
- Une étape de contrôle de charge par l'utilisateur, avec notification et information de l'état de chargement.

Selon un mode de réalisation de l'invention, les étapes de choix et de contrôle de charge par l'utilisateur peuvent être réalisées localement ou à distance via les moyens de communication à distance.

D'autres buts, caractéristiques et avantages de l'invention seront mieux compris et apparaîtront plus clairement à la lecture de la description faite, ci-après, en se référant aux figures annexées et données à titre d'exemple :
- la figure 1 est une représentation schématique d'un mode d'utilisation du dispositif selon l'art antérieur,
- la figure 2 est une représentation schématique d'un mode de réalisation du dispositif selon l'invention,
- la figure 3 est une représentation schématique de la mise en oeuvre d'un mode de réalisation particulier du procédé selon l'invention.

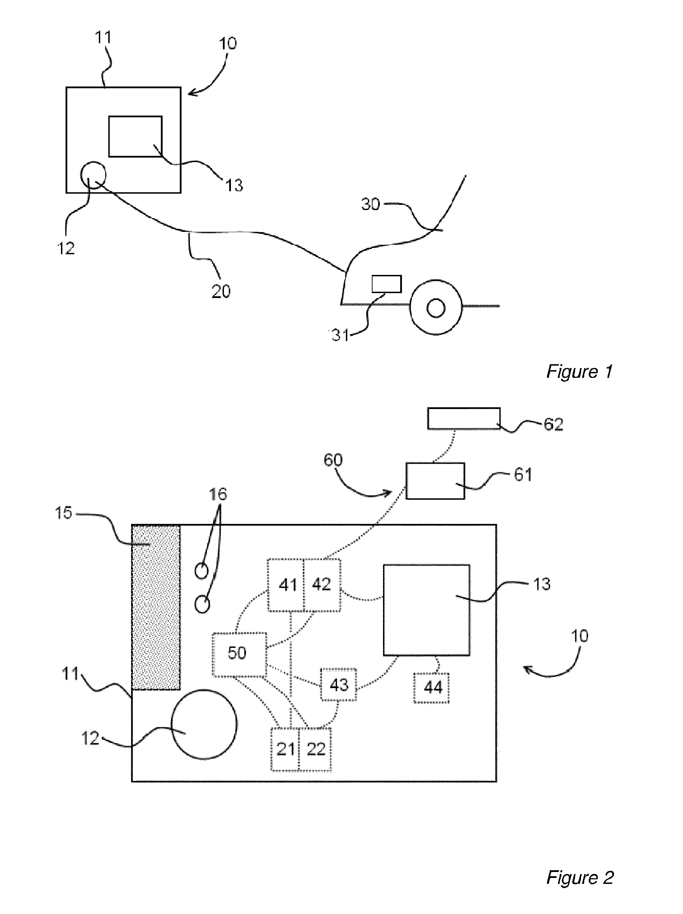

Selon un premier aspect illustré sur la figure 1, la présente invention concerne un dispositif (10) de chargement individuel de véhicules (30) électriques ou hybrides. On entend par dispositif de chargement individuel, une borne de rechargement. Cette borne comporte une source d'alimentation électrique et est reliée au tableau électrique/point de prélèvement de l'utilisateur via soit un disjoncteur soit un fusible spécifique, par exemple de 16 A ou jusqu'à 20 A. Cette borne (10) peut être reliée directement au moyen de recharge (31) embarqué du véhicule via un chargeur embarqué et un câble (20) électrique. Cette borne permet ainsi la recharge du véhicule via un moyen de recharge (31) du véhicule également appelé batterie de stockage d'énergie électrique pour l'alimentation d'une chaîne de traction électrique d'un véhicule hybride ou électrique. Cette batterie est gérée par un système de gestion de batterie qui permet de gérer le fonctionnement de la batterie mais également sa recharge.

Ce type de borne (10) peut être disposé dans divers endroits en fonction de son utilisation. La borne peut être disposée sur une place de stationnement privé comme par exemple un garage dans une maison. En effet, le temps de charge principal d'un véhicule hybride ou électrique a lieu typiquement au domicile de l'utilisateur où il est rechargé la nuit pour être utilisée le matin. La borne peut aussi être installée sur une place de stationnement public comme par exemple le lieu de travail, dans les parcs de stationnement publics fermés, dans les parcs de stationnements de centre commerciaux, dans les stations services ou sur la voirie. Cela permet de pouvoir disposer de la puissance nécessaire pour un trajet retour ou supplémentaire.

La borne est constituée d'un boitier (11) comportant une prise (12) de connexion à un moyen de recharge (31) d'un véhicule (30). La prise permet ainsi la connexion d'un câble (20) électrique assurant la liaison entre la borne et le véhicule. La prise comporte un clapet de protection. Ce clapet de protection permet d'éviter à tout élément étranger de type goutte d'eau ou poussière de pénétrer dans la prise, notamment lorsqu'elle est disposée à l'extérieur comme par exemple dans un parc de stationnement de supermarché. La prise comporte un système de verrouillage mécanique et un système de déverrouillage automatique en cas de panne d'électricité. La prise comporte des moyens de détection d'introduction des broches de la fiche d'alimentation reliée au véhicule, et des moyens de détection du verrouillage.

Le boitier comporte également une interface de données (13) associée à des moyens de réception d'informations émises à partir de l'interface de données. Cette interface peut être formée par un écran de type écran à cristaux liquides (également appelé écran LCD pour Liquid Crystal Display selon la terminologie anglaise) associé à un clavier. Selon un autre type de réalisation, l'écran peut être un écran tactile. Cette interface de données va permettre à l'utilisateur de donner des instructions et de vérifier les informations sur l'écran. Les moyens de saisie des données sont formés par l'écran lui-même ou un clavier numérique ou une télécommande ou un système à reconnaissance vocale.

Le boitier comporte une horloge interne avec date et calcul du jour et sauvegarde via une pile. La durée de sauvegarde est par exemple supérieure à 8 ans.

Le boitier (illustré sur la figure 2) peut également comporter des moyens d'émissions sonores (15) permettant d'émettre par exemple un bruit du type alarme lorsque le véhicule est rechargé ou pour indiquer le statut (charge, décharge...). Les moyens d'émission sonores peuvent être formés par des mini-haut-parleurs.

Le boitier peut comporter des moyens lumineux (16) permettant d'indiquer l'état de la borne, par exemple « libre » ou « occupée ». Les moyens lumineux peuvent être composés par des diodes électroluminescentes (ou LED pour Light-Emitting Diode selon la terminologie anglaise), de différentes couleurs : une première couleur si la borne est libre par exemple verte, et une deuxième couleur si la borne est occupée par exemple rouge. Toutes autres couleurs peuvent être utilisées. Selon un autre mode de réalisation, le moyen lumineux est utilisé sans couleur particulière, soit la borne est disponible et le moyen lumineux est allumé, soit la borne n'est pas disponible est le moyen lumineux est éteint.

Le dispositif de chargement comporte des moyens de détection (21) du statut du véhicule permettant de déterminer :
- si le véhicule est prêt ou n'est pas prêt à être rechargé en fonction du gradient de chargement,
- s'il est nécessaire de réduire la charge suite à un signal extérieur (par exemple du gestionnaire d'énergie du bâtiment ou du parking qui répartit la capacité de raccordement disponible à différentes places de chargement) ou suite à un signal du système de gestion de la batterie de la voiture,
- si une ventilation est nécessaire par exemple en cas de surchauffe.

La borne de charge est également une borne "intelligente" pour le système de gestion de la batterie puisqu'elle communique avec le véhicule afin de distribuer l'énergie adaptée au véhicule et cela dans des conditions optimales de sécurité.

Le dispositif de chargement comprend des moyens de mesure (41) de la puissance active et réactive (inductive et capacitive) consommée ou produite, et des moyens de calcul (42) de l'énergie consommée incluant un convertisseur de cette énergie consommée sous forme monétaire. Via l'interface de données, la borne permet ainsi l'affichage des données de chargement sous forme monétaire (kW - kWh - €/kWh) en temps réel ainsi qu'un historique. Cet affichage est réalisé après que la valeur monétaire par unité d'énergie électrique a été rentrée par l'utilisateur ou par un tiers ou préprogrammée.

Le dispositif de chargement dispose de moyens de contrôle (43) de la charge incluant des moyens de programmation de la charge et des moyens de planification des opérations de charge et/ ou de décharge. L'utilisateur peut ainsi programmer l'heure, la durée et la puissance de chargement. Il est ainsi possible de demander un chargement immédiat, d'arrêter un chargement en cours et de le redémarrer, de programmer un chargement futur. L'utilisateur émet ses ordres de contrôle de charge via l'interface de données (13). L'utilisateur peut également choisir de faire un chargement selon un calendrier défini ou définissable par l'utilisateur lui-même ou un gestionnaire d'énergie (soit calendrier de plages horaires déterminé en fonction des besoins du réseau électrique, soit par exemple un calendrier déterminé par le fournisseur d'énergie et convenu avec l'utilisateur via son contrat d'énergie, déterminé tant en fonction des besoins du réseau électrique qu'en fonction des marchés d'approvisionnement d'énergie électrique). L'utilisateur peut également choisir d'accepter un déchargement selon un calendrier défini ou définissable par l'utilisateur lui-même ou le gestionnaire d'énergie en fonction des besoins du réseau électrique ou des marchés d'approvisionnement d'énergie électrique. L'utilisateur peut faire ce choix localement ou à distance.

Le dispositif de chargement comporte des moyens d'interaction (22) avec le véhicule. Ces moyens d'interaction (22) permettent d'envoyer les ordres de planification et de programmation de l'utilisateur au véhicule. Ces moyens d'interaction (22) permettent également de détecter la capacité du câble de recharge du véhicule. De cette façon, la puissance de charge est adaptée ce qui évite des problèmes de surchauffe du câble. Les moyens d'interaction (22) avec le véhicule permettent également de contrôler le système de gestion de la batterie embarqué dans le véhicule afin de réduire ou augmenter la puissance prélevée.

Le dispositif comprend des moyens de vérification des informations permettant de vérifier, via l'interface de données, les ordres donnés concernant la programmation et la planification des opérations de charges et de décharges.

Le dispositif de chargement comporte des moyens (50) d'enregistrement en temps réel, de stockage et de transfert informatisés :
- des données de consommation d'électricité, c'est-à-dire l'énergie électrique prélevée, au point de prélèvement, avec horodatage,
- des volumes de consommation à des périodes données et à des cycles de chargement donnés,
- du statut du véhicule déterminé avec les moyens de détection du statut de véhicule: connecté, non connecté à la borne de chargement, en cours de charge, chargé, non chargé, etc. et
- de la programmation prévue ou de la planification choisie par l'utilisateur.

Le dispositif comprend également des moyens de communication à distance (60) bidirectionnels. Le dispositif est bidirectionnel au moins pour la programmation de la charge (choix de chargement en direct par l'utilisateur, choix pour un des calendriers proposés par un gestionnaire d'énergie électrique), la mise à jour des logiciels, l'envoi de valeur monétaire, de prix par unité d'énergie électrique prélevée, le statut du véhicule (connecté, chargé, etc), etc.

Ces moyens de communication à distance (60) permettent de contrôler une grande partie des fonctionnalités du dispositif de chargement à distance. Ces moyens de communications à distance (60) comprennent au moins une passerelle connectée au modem internet ou une passerelle avec télécommunication via un opérateur mobile (61).

La borne (10) est ainsi connectée au réseau internet, ce qui va lui permettre de communiquer à distance avec les utilisateurs et les gestionnaires d'électricité.

Le dispositif permet d'envoyer vers une plate-forme (62), accessible via internet, l'ensemble des informations récoltées.

Le dispositif peut, via la plate-forme (62), être associé à un logiciel de gestion de chargement. Ce logiciel permet ainsi de commander la borne à distance via internet et donc via un ordinateur ou un téléphone mobile.

L'utilisateur peut ainsi planifier le chargement de son véhicule à distance en se connectant au site de gestion de chargement ou via le logiciel de gestion de chargement. L'utilisateur peut également commander le chargement à distance en envoyant un court message textuel (ou SMS pour Short Message Service selon la terminologie anglais) via une plate-forme de gestion à distance. La plate-forme de gestion à distance peut comporter une fonction d'accusé de réception. De cette façon, l'utilisateur reçoit un accusé lors de l'envoi du SMS ou lors de l'envoi d'un ordre, via le site internet dédié. L'accusé peut se faire par l'envoi d'un SMS, par l'affichage direct sur l'écran de l'ordinateur ou par l'envoi d'un message électronique.

Les moyens de communication à distance (60) étant bidirectionnels, ils permettent également de recevoir des informations à distances. Ces informations peuvent provenir du client ou d'un gestionnaire d'énergie via la plateforme (62) accessible via internet. L'envoi peut se faire via un téléphone portable ou un ordinateur.

Le dispositif permet ainsi un contrôle de charge pilotable à distance :
- pour passer à un chargement immédiat, arrêter ou redémarrer celui-ci ou
- pour répondre à un calendrier de chargement défini par l'utilisateur ou par un gestionnaire d'énergie.

Ce dispositif communique via internet avec la plateforme (62), qui permet, en combinaison avec d'autres modules, d'identifier l'utilisateur, ou de transférer les données en provenance du dispositif servant à la facturation. Le dispositif permet également d'établir toutes les informations de consommation pour le chargement nécessaires pour la facturation de la consommation électrique de l'utilisateur. C'est-à-dire que le coût du rechargement du véhicule peut être imputé sur les factures de consommation électrique personnelle ou prise en charge par le gestionnaire de bâtiment ou de flotte de voitures, sur la base des informations transmises vers la plateforme (62) accessible via internet.

Le dispositif permet ainsi l'envoi de notification et d'information de l'état de chargement. Il permet d'établir l'historique des chargements, et met à disposition les données de consommation.

La borne (10) de chargement permet d'utiliser, si le système de gestion de la batterie le prévoit, l'énergie stockée dans les véhicules électriques afin de soutenir le réseau électrique en période de pic de consommation ou en cas d'urgence (orage, coupure de câble, ...). L'énergie stockée dans la batterie du véhicule peut également suppléer aux exigences électriques de l'habitation. Pour cela le chargeur embarqué dans le véhicule doit pouvoir fonctionner de façon bidirectionnelle (c'est-à-dire que l'énergie circule dans les deux sens).

La borne de chargement peut fonctionner de façon isolée ou être intégrée dans le réseau local d'une habitation (smart grid selon la terminologie anglaise).

Selon un autre aspect, l'invention concerne un système de chargement et/ou déchargement d'un véhicule hybride ou électrique constitué par un dispositif (10) de chargement et /ou déchargement avec planning programmable localement et à distance (y compris son propre planning ou un planning proposé par un gestionnaire d'énergie) et qui interagit de façon bidirectionnelle avec le système de gestion de la batterie embarqué dans le véhicule.

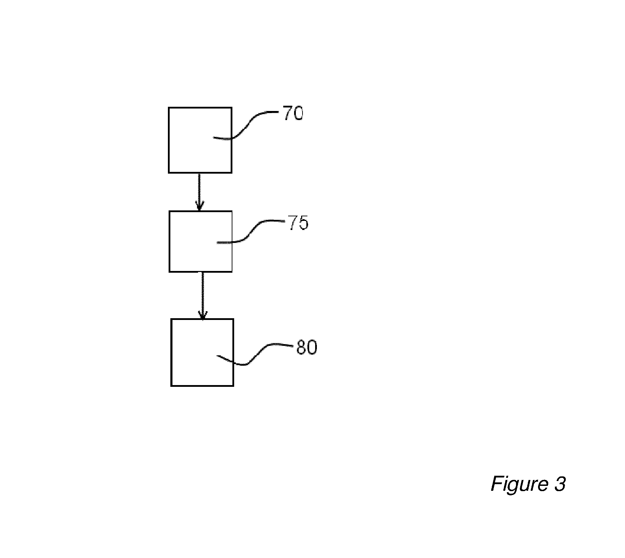

Selon un autre aspect, l'invention concerne un procédé de chargement et /ou déchargement (illustré sur la figure 3) comprenant :
- une étape de connexion (70) du véhicule au dispositif (10) de chargement et/ou déchargement selon une des revendications 1 à 7,
- une étape de choix (75) du calendrier de chargement via l'interface de données (13) et les moyens de contrôle (43),
- une étape de contrôle (80) de charge par l'utilisateur, avec notification et information de l'état de chargement.

Les étapes de choix (75) et de contrôle (80) de charge par l'utilisateur peuvent être réalisées localement ou à distance via les moyens de communication à distance (60, 62).

Le dispositif de chargement et/ou déchargement présente ainsi les avantages suivants
- communication suivant les protocoles conformes aux normes des constructeurs de voiture,
- application des désidératas de l'utilisateur en termes de planification de charge, c'est-à-dire son propre choix ou s'en remettre au choix d'un gestionnaire d'énergie pour tout ou partie des calendriers proposés par ce dernier
- mesure avec précision de l'énergie électrique prélevée,
- suivi en ligne et analyse d'historique de chargements, y compris des alarmes,
- intégration dans un environnement réseau local haute technologie,
- communication de manière bidirectionnelle permettant la gestion dynamique de chargement,
- facilitation de l'intégration de dispositifs importants en termes de capacité de stockage pouvant participer activement à l'optimisation de la consommation.

### Exemples de mise en oeuvre:

### Utilisation du dispositif localement :

Un utilisateur ou client de véhicule (30) hybride ou électrique décide de recharger le véhicule dans une aire de stationnement, comme un parking public ou privé.

Le véhicule est garé sur une place de stationnement comportant un dispositif de chargement (10) selon l'invention. Lorsque le dispositif de chargement est disponible, les moyens lumineux (16) sont allumés en vert.

L'utilisateur s'identifie via les moyens d'identification (14), séparément du dispositif, mais connecté à la plateforme (62) accessible via internet.

Le véhicule (30) est ensuite connecté via un câble (20) d'alimentation au dispositif de chargement (10). Le câble (20) permet ainsi de relier la batterie au système de distribution électrique (compagnie d'électricité locale) via le dispositif de chargement (10).

Lorsque le câble (20) d'alimentation provenant du véhicule (30) est connecté au dispositif de chargement (10), la communication entre le véhicule (30) d'une part et le dispositif de chargement (10) d'autre part est établie. Les moyens de détection (21) du statut du véhicule déterminent si le véhicule (30) peut être rechargé.

L'utilisateur peut, à partir de l'interface de données (13), définir le type de rechargement qu'il souhaite pour le véhicule. Par exemple, l'utilisateur définit l'heure de début du rechargement, la durée du rechargement et la puissance du chargement via les moyens de contrôle.

Si cela n'a pas été préprogrammé ou n'est pas activé via internet par le gestionnaire d'énergie, l'utilisateur rentre les données concernant la valeur monétaire par unité d'énergie électrique.

A l'heure prévue du début de chargement, le chargement commence. Au cours du chargement, les moyens d'interaction (22) avec le véhicule vérifient que la capacité du câble (20) et que la puissance du chargement sont en accord avec ce que peut supporter la batterie du véhicule (30).

Les moyens de mesure (41, 42) et de calcul, de la puissance consommée, du dispositif de chargement, permettent de calculer en temps réel la consommation électrique du véhicule en terme de rechargement, c'est-à-dire l'énergie électrique prélevée. L'ensemble de ces informations est stocké grâce aux moyens d'enregistrement et stockage (50).

Pendant toute la durée du chargement, l'utilisateur peut vérifier, grâce aux moyens de consultation, si les ordres donnés concernant la programmation du chargement sont en accord avec ce qu'il souhaite, vérifier la consommation électrique du véhicule en terme de rechargement, c'est-à-dire l'énergie électrique prélevée, et le coût du chargement. Le paiement se fait sur base des mesures collectées par la borne et transféré via la plateforme accessible via internet.

Lorsque l'ensemble de ces opérations est terminé, le véhicule (30) peut être déconnecté de la borne (10) de charge.

### Utilisation du dispositif à distance :

Ce mode d'utilisation trouve par exemple son utilité pour les chargements réalisés dans un lieu privé et notamment au domicile du client.

Dans ce type d'utilisation le véhicule (30) est déjà connecté au dispositif de chargement (10). L'utilisateur est situé dans un lieu différent, et par exemple sur son lieu de travail et dispose d'un ordinateur ou d'un téléphone mobile de type « smart phone ». L'utilisateur peut ainsi planifier ou replanifier le chargement de son véhicule à distance en se connectant au site de gestion de chargement ou via le logiciel de gestion de chargement. L'utilisateur peut également commander le chargement à distance en envoyant un SMS.

Les fonctionnalités de gestion à distance sont identiques à celles disponibles localement sur la borne (10) : planification du chargement, consultation de l'état du chargement, envoi des données pour la facture.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif (10) de chargement et/ou déchargement pour véhicules (30) hybrides ou électriques, comprenant une source d'alimentation électrique, une prise (12) de connexion à un moyen de recharge embarqué (31) du véhicule, une interface de données (13), des moyens de communication à distance (60), des moyens d'échange d'informations (22) avec le véhicule, **caractérisé en ce qu'**il comprend des moyens de contrôle (43) de charge du véhicule (30).

2. Dispositif selon la revendication 1, dans lequel les moyens de contrôle (43) de charge comprennent des moyens de programmation de la charge et des moyens de planification des opérations de charge et/ou décharge.

3. Dispositif selon une des revendications 1 ou 2, dans lequel les moyens de contrôle (43) de charge sont associés à l'interface de données (13) et les moyens d'interactions (22) avec le véhicule.

4. Dispositif selon une des revendications 1 à 3, comprenant des moyens de communication (60) à distance.

5. Dispositif selon la revendication 4, dans lequel les moyens de communication à distance (60) sont bidirectionnels.

6. Dispositif selon une des revendications 1 à 5, comprenant des moyens de mesure (41) de la puissance consommée ou produite associés à des moyens de calcul (42) de l'énergie consommée ou produite les moyens de calcul incluant un convertisseur de cette énergie sous forme monétaire.

7. Dispositif selon la revendication 6, comprenant des moyens pour enregistrer et transmettre les données pour la facturation de l'énergie consommée par l'utilisateur via une plateforme accessible par internet

8. Système de chargement et/ou déchargement d'un véhicule hybride ou électrique, **caractérisé en ce qu'**il est constitué par un dispositif (10) de chargement et /ou déchargement selon une des revendications précédentes communiquant de façon bidirectionnelle avec un système de gestion de la batterie embarqué dans le véhicule.

9. Procédé de chargement et /ou déchargement comprenant :
- Une étape de connexion (70) du véhicule au dispositif (10) de chargement et/ou déchargement selon une des revendications 1 à 7,
- Une étape de choix (75) du calendrier de chargement via l'interface de données (13) et les moyens de contrôle (43),
- Une étape de contrôle (80) de charge par l'utilisateur, avec notification et information de l'état de chargement.

10. Procédé selon la revendication 9 **caractérisé en ce que** les étapes de choix (75) et de contrôle (80) de charge par l'utilisateur peuvent être réalisées localement ou à distance via les moyens de communication à distance (60).
